# EUROPÄISCHE PATENTSCHRIFT

(11) **EP 2 041 452 B1**
(45) Veröffentlichungstag und Bekanntmachung des Hinweises auf die Patenterteilung: **31.03.2010**
(21) Anmeldenummer: 07785914.8
(22) Anmeldetag: 06.07.2007
(51) Int. Cl.: F16F 15/32

(54) **AUSWUCHTVORRICHTUNG UND VERFAHREN**
BALANCING DEVICE AND METHOD
DISPOSITIF D'ÉQUILIBRAGE ET PROCÉDÉ

(30) Priorität: 07.07.2006 DE 102006031806
(43) Veröffentlichungstag der Anmeldung: 01.04.2009
(73) Patentinhaber: advotec., 97080 Würzburg (DE)
(72) Erfinder: CHODURA, Ewald, 97854 Steinfeld (DE)
(74) Vertreter: Böck, Bernhard
(86) Internationale Anmeldenummer: PCT/EP2007/006000
(87) Internationale Veröffentlichungsnummer: WO 2008/003507

(56) Entgegenhaltungen:
- BE-A- 430 286
- DE-U1- 9 307 363
- GB-A- 577 826

## Beschreibung

Die Erfindung betrifft eine Vorrichtung und ein Verfahren zur Auswuchtung eines Rotationskörpers mit zwei gegeneinander verdrehbaren und feststellbaren Ringen mit jeweils einer vom Ring mitgenommenen, umlaufenden exzentrischen Masse, wobei sich die Schwerpunkte der exzentrischen Massen in einer Ebene senkrecht zu einer Rotationsachse des Rotationskörpers bewegen.

Rotationskörper, wie z.B. rotierende Maschinenteile oder mehrteilige rotierende Vorrichtungen, weisen häufig aufgrund von Herstellungs- und Montagetoleranzen oder in Folge von betriebsbedingtem Verschleiß eine so genannte Unwucht auf. Bei einer Unwucht verläuft die Rotationsachse des Rotationskörpers oder der Vorrichtung nicht durch den Massenschwerpunkt des Rotationskörpers bzw. der Vorrichtung. Dies führt vor allem bei hohen Drehzahlen zu Vibrationen und erhöhtem Verschleiß.

Unter dem Begriff Rotationskörper im Sinne der Erfindung sind alle Arten von drehbar gelagerten Körpern und Vorrichtungen, die eine Mehrzahl von Bauteilen aufweisen, wie z. B. Antriebswellen, Kurbelwellen, Achsen, Rotoren von Elektromotoren, Hohlwellen, Felgen, Räder usw. zu verstehen.

Die Kompensation einer Unwucht erfolgt häufig durch das Anbringen von Wuchtgewichten bzw. durch einen Materialabtrag an einer geeigneten Stelle eines Rotationskörpers. Handelt es sich um Rotationskörper, bei denen sich die Unwuchtverhältnisse während des Betriebs ändern können, ist der Einsatz einer Auswuchtvorrichtung sinnvoll. Aus dem Stand der Technik sind insbesondere Auswuchtvorrichtungen bekannt, bei denen durch Verdrehung zweier exzentrischer Massen gegeneinander eine vorhandene Unwucht kompensiert werden kann. Diese Auswuchtvorrichtungen sind durch die Verstellbarkeit der exzentrischen Ausgleichsmassen zueinander auf sich veränderte Unwuchten, wie z. B. durch den Wechsel einer Schleifscheibe, leicht anpassbar und können in verschiedenen Baugrößen, je nach Anwendungsfall, Verwendung finden.

Aus der DE 233 590 ist ein Verfahren zum Auswuchten von Rotationskörpern bekannt, bei dem zwei Scheiben mit jeweils exzentrischen Bohrungen entlang einer Rotationsachse innerhalb eines umlaufenden Hohlkörpers nebeneinander angeordnet sind bzw. eine der Scheiben in die exzentrische Bohrung der anderen Scheibe eingesetzt ist. Durch Verdrehung der beiden Scheiben gegeneinander ist es möglich, die Lage des Massenschwerpunktes des Gesamtsystems zu verändern und so eine Unwucht des Rotationskörpers zu kompensieren.

Eine derartige Auswuchtvorrichtung ist ebenfalls aus der DE 93 07 363 U1 bekannt, wobei hier auf einer Welle oder Achse zwei Scheiben bzw. Ringe mit exzentrischen Bohrungen befestigt sind. Einer der Ringe ist mit einem übereinstimmend ausgebildeten Innendurchmesser auf einen Rotationskörper aufgesetzt und wird von einem zweiten Ring vollständig in dessen Innendurchmesser aufgenommen. Beide Ringe sind mit Klemmvorrichtungen versehen, sodass eine Einstellung der relativen Lage der exzentrischen Massen der Ringe und des Rotationskörpers gegeneinander erfolgen kann. Die Ringe sind entsprechend dem Rotationsdurchmesser ihrer resultierenden, maximal einstellbaren Exzentrizität von einer Schutzabdeckung umgeben.

Der vorliegenden Erfindung liegt die Aufgabe zugrunde, eine Vorrichtung und ein Verfahren zur Auswuchtung von Rotationskörpern vorzuschlagen, mit der bzw. dem Unwuchten auf einfache Weise kompensiert werden können.

Diese Aufgabe wird durch eine Vorrichtung mit den Merkmalen des Anspruchs 1 und ein Verfahren mit den Merkmalen des Anspruchs 13 gelöst.

Die erfindungsgemäße Auswuchtvorrichtung für einen Rotationskörper weist zwei gegeneinander verdrehbare und feststellbare Ringe auf, mit jeweils einer vom Ring mitgenommenen, umlaufenden exzentrischen Masse, wobei sich die Schwerpunkte der exzentrischen Massen in einer Ebene senkrecht zu einer Rotationsachse des Rotationskörpers bewegen.

Ein Verdrehen der exzentrischen Massen gegeneinander ermöglicht die Kompensation einer Unwucht des Rotationskörpers, da die resultierende Exzentrizität beider Massen zwischen einem maximalen Wert und Null eingestellt werden kann. Ist die resultierende exzentrische Masse gleich groß der Masse der Unwucht des Rotationskörpers und dieser Masse, bezogen auf die Rotationsachse gegenüberliegend, ergibt sich für das gesamte Rotationssystem eine resultierende Masse, welche einen auf der Rotationsachse liegenden Gesamtmassenschwerpunkt hat. Die entsprechenden Winkelabstände der einzelnen Massenschwerpunkte zueinander, sind bezogen auf die Rotationsachse der Ringe und des Rotationskörpers feststellbar, sodass eine zur Kompensation einer Unwucht führende Einstelllage fixiert werden kann. Beide exzentrischen Massen sind in einer Ebene senkrecht zur Rotationsachse angeordnet, sodass durch die exzentrischen Massen kein auf die Rotationsachse bezogenes Biegemoment hervorgerufen wird, aus welchem Schwingungen resultieren könnten. Eine sogenannte dynamische Unwucht, hervorgerufen durch die Auswuchtvorrichtung selbst, wird somit vermieden. Weiter sind eine Rotationskörperfläche des einen Ringes mit der äußeren Masse und eine Rotationskörperfläche des zweiten Ringes mit der inneren Masse in jeder Einstelllage rotationssymmetrisch zur Rotationsachse. Die Außenflächen der Auswuchtvorrichtung sind somit in jeder Einstelllage immer rotationssymmetrisch zur Rotationsachse, sodass die Auswuchtvorrichtung an sowohl Außendurchmessern wie auch Innendurchmessern von beliebigen Rotationskörpern angebracht werden kann.

Als besonders vorteilhaft erweist es sich, wenn die exzentrischen Massen in jeder Einstelllage radial voneinander beabstandet sind. Somit besteht immer ein Zwischenraum zwischen den Massen, wobei die Massen aufgrund der rotationssymmetrischen Außenflächen der Auswuchtvorrichtung in einen zwischen beiden Massen befindlichen Zwischenraum weisen. Weder der äußere Ring wird so in seinem äußeren Durchmesser noch der innere Ring in seinem inneren Durchmesser von den exzentrischen Massen überragt, sodass für die Auswuchtvorrichtung, als eine in sich geschlossene Baugruppe, keine besonderen Schutzabdeckungen hinsichtlich rotierender exzentrischer Teile notwendig sind.

In einer besonders bevorzugten Ausführungsform der Auswuchtvorrichtung sind die exzentrischen Massen an den zugehörigen Ringen ausgebildet. Die Kreisquerschnittsform eines Ringes wird so um die Form einer Masse ergänzt, wobei die Form der Masse jede beliebige Form annehmen kann. Auch der Rotationsquerschnitt eines Ringes kann beliebige Rotationskörperformen annehmen, derart, dass ein Ring beispielsweise als Scheibe, Hülse oder Plansch ausgebildet sein kann.

In einer weiteren vorteilhaften Ausführungsform kann zumindest eine exzentrische Masse der Auswuchtvorrichtung mit einem zugehörigen Ring verbindbar sein. Der Ring weist dann eine exzentrische Masse auf, die kraft- bzw. formschlüssig mit dem Ring durch z. B. Kleben, Verschrauben, Auf- oder Einstecken mit dem Ring fest verbunden ist. Je nach Art der Vebindung können die exzentrischen Massen der Ringe entsprechend des jeweiligen Anwendungsfalls ausgewechselt und gegen größere oder kleinere Massen getauscht werden.

In einer weiteren vorteilhaften Ausführungsform ist zumindest ein Ring der Auswuchtvorrichtung mit dem Rotationskörper kraft- bzw. formschlüssig verbindbar. Die Verbindung kann mit und ohne zusätzliche Bauteile, wie z. B. durch eine Pressverbindung, Steckverbindung, Schraubverbindung bzw. vermittels einer Schrauben-, Stift- oder Federverbindung, erfolgen. Grundsätzlich können alle geeigneten Verbindungsarten Zur Anwendung kommen. Besonders vorteilhaft ist eine Verbindungsart, die eine Verstellung eines Ringes mit einer exzentrischen Masse gegenüber dem Rotationskörper ermöglicht, derart, dass bezogen auf die Rotationsachse beliebige Winkelabstände zwischen dem Massenschwerpunkt der exzentrischen Masse und dem Massenschwerpunkt des Rotationskörpers einstellbar sind.

Ist einer der Ringe der Auswuchtvorrichtung vermittels einer Verbindungseinrichtung kraftschlüssig mit dem anderen Ring verbindbar, kann eine Einstellung der ersten exzentrischen Masse gegenüber der zweiten exzentrischen Masse bzw. beider Massen gegenüber der Unwucht des Rotationskörpers erfolgen, sodass die Einstellung zur Kompensation der Unwucht des Rotationskörpers führt. Die Verbindungseinrichtung kann derart ausgebildet sein, dass durch ein Aneinanderpressen beider Ringe ein Kraftschluss zwischen beiden Ringen entsteht, welcher eine Fixierung der gewünschten Einstellung beider Massen gegeneinander ermöglicht.

Ist die Verbindungseinrichtung der Auswuchtvorrichtung zur Verbindung beider Ringe aus einer Scheibe gebildet, kann eine Fixierung beider Ringe zueinander durch die Scheibe erfolgen. Die Scheibe kann mit dem ersten und dem zweiten Ring fest verbunden sein, auch kann es ausreichend sein, wenn die Scheibe mit einem der Ringe oder dem Rotationskörper fest verbunden ist und den zweiten Ring gegen eine Wandung des ersten Rings presst.

Als besonders vorteilhaft erweist es sich, wenn die Scheibe der Auswuchtvorrichtung über ein Gewinde mit einem Ring oder dem Rotationskörper verbunden ist. Das Gewinde kann auf einem Außen- oder einem Innendurchmesser des Ringes mit der äußeren Masse ausgebildet sein, wobei die Scheibe in den Ring eingeschraubt bzw. mit einem Vorsprung am Außendurchmesser der Scheibe auf den Ring aufgeschraubt werden kann.

Eine Einstellung beider exzentrischen Massen gegeneinander kann besonders leicht erfolgen, wenn die Scheibe der Auswuchtvorrichtung in axialer Richtung Durchgangsöffnungen aufweist. Die Durchgangsöffnungen können als Langlöcher ausgebildet und in verschiedenen Bogenlängen und radialen Abständen zueinander versetzt angeordnet sein. Ist die Scheibe mit einem Ring fest verbunden, können beliebige Winkeleinstellungen zu dem zweiten Ring vorgenommen werden, dadurch, dass ein Ring vermittels z. B. durch die Durchgangsöffnungen der Scheibe hindurchgeführte Schrauben an der Scheibe befestigt wird. Der radiale Versatz und der Winkelversatz der Durchgangsöffnungen zueinander bzw. unterschiedliche Bogenlängen ermöglichen jede beliebige Einstellung im Bereich von 360 Grad.

Als besonders vorteilhaft erweist es sich, wenn der Ring mit der inneren Masse im Ring mit der äußeren Masse aufgenommen ist, sodass der Ring mit der inneren Masse den Ring mit der äußeren Masse nicht axial überragt. Hieraus ergibt sich eine besonders vereinfachte und kompakte Bauform der erfindungsgemäßen Auswuchtvorrichtung.

Zur Integration der Auswuchtvorrichtung mit einer Lagereinrichtung kann einer der Ringe aus einer Lagereinrichtung gebildet sein. Die Lagereinrichtung kann die innere oder die äußere exzentrische Masse aufweisen bzw. die Masse kann an der Lagereinrichtung ausgebildet sein. Weiter kann die Lagereinrichtung eine Lagereinrichtung zur axialen oder radialen Lagerung eines Rotationskörpers sein. Durch die Ausbildung einer der Ringe als Lagereinrichtung kann auf zusätzliche Bauteile verzichtet werden.

In einer besonders vorteilhaften Ausführungsform kann einer der Ringe mit einer exzentrischen Masse aus einem Ring eines Wälzlagers gebildet sein. Dies ermöglicht die Integration der Auswuchtvorrichtung an oder im Innen- bzw. Außenring eines Wälzlagers.

Weitere vorteilhafte Ausgestaltungen der Erfindung ergeben sich, wenn die Lagereinrichtung ein Gleitlager aufweist bzw. daraus gebildet ist. So können kleine Baugrößen einer Auswuchtvorrichtung in Verbindung mit einer Lagereinrichtung realisiert werden. Auch können die umlaufenden exzentrischen Massen aus verschiedensten Werkstoffen ausgebildet werden. Die exzentrischen Massen können so, ohne dass ihre Bauteilform geändert werden müsste, in ihrer Masse variiert werden.

Bei einem Verfahren zum Auswuchten eines Rotationskörpers erweist es sich als vorteilhaft, wenn durch gegenseitiges Verdrehen zweier exzentrischer Massen ihre resultierende Unwucht, bezogen auf eine Rotationsachse, von einem maximalen Wert auf Null einstellbar ist. Das Auswuchten des Rotationskörpers wird vereinfacht, da die resultierende Unwucht der Massen auf einen Wert, der einer Unwucht des Rotationskörpers entspricht, einstellbar ist, wodurch die Unwucht des Rotationskörpers kompensierbar ist.

Weitere vorteilhafte Ausführungsformen des Verfahrens ergeben sich aus den Merkmalsbeschreibungen der auf den Vorrichtungsanspruch 1 rückbezogenen Unteransprüche.

Im Folgenden wird die Erfindung unter Bezugnahme auf die beigefügte Zeichnung näher erläutert.

Es zeigen:
- Fig. 1: eine Auswuchtvorrichtung in einer Schnittansicht entlang einer Linie I-I aus Fig. 2, gemäß einer ersten Ausführungsform;
- Fig. 2: die Auswuchtvorrichtung aus Fig. 1 in einer Schnittansicht entlang einer Linie II-II;
- Fig. 3: eine Auswuchtvorrichtung in einer Schnittansicht entlang einer Linie III-III aus Fig. 4, gemäß einer zweiten Ausführungsform;
- Fig. 4: die Auswuchtvorrichtung aus Fig. 3 in einer Schnittansicht entlang einer Linie IV-IV;
- Fig. 5: eine Auswuchtvorrichtung in einer Schnittansicht gemäß einer dritten Ausführungsform;
- Fig. 6: eine Auswuchtvorrichtung in einer Schnittansicht gemäß einer vierten Ausführungsform;
- Fig. 7: eine Auswuchtvorrichtung in einer Schnittansicht gemäß einer fünften Ausführungsform;
- Fig. 8: eine Auswuchtvorrichtung in einer Schnittansicht gemäß einer sechsten Ausführungsform;
- Fig. 9: die Auswuchtvorrichtung aus Fig. 8 in einer unterbrochenen Seitenansicht;
- Fig. 10: eine Auswuchtvorrichtung in einer Schnittansicht gemäß einer siebten Ausführungsform;
- Fig. 11: eine Auswuchtvorrichtung in einer Schnittansicht gemäß einer achten Ausführungsform,

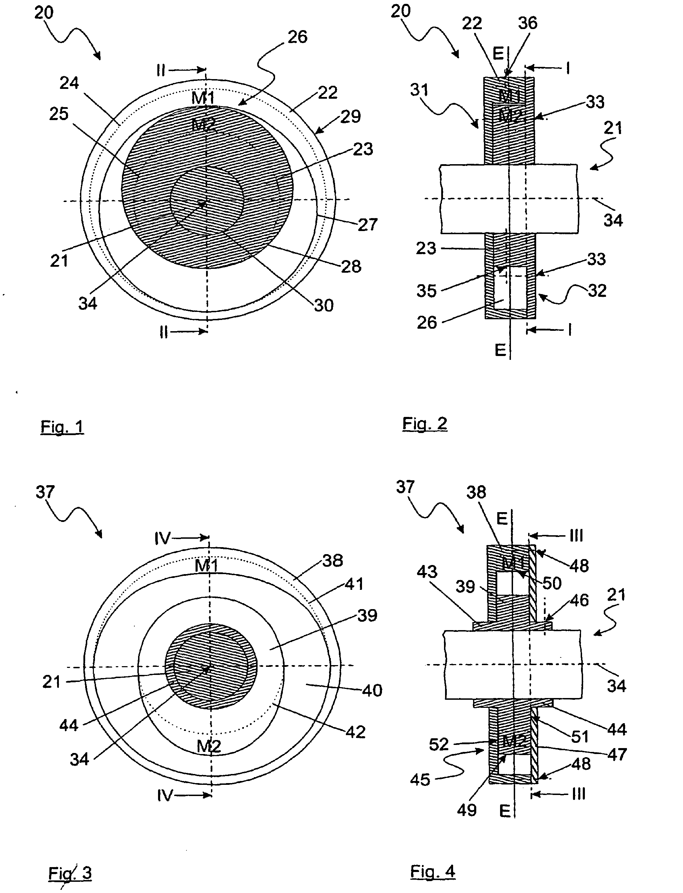

Fig. 1 zeigt eine Auswuchtvorrichtung 20 auf einem Rotationskörper 21 im Schnitt entlang einer Linie I-I aus Fig. 2. Die Auswuchtvorrichtung 20 weist einen ersten Ring 22 und einen zweiten Ring 23 auf, wobei am Ring 22 eine exzentrische Masse M1 und am Ring 23 eine exzentrische Masse M2 ausgebildet ist. Die Massen M1 und M2 überragen dabei jeweils die Ringe 22 bzw. 23 entlang einer hier gestrichelt gekennzeichneten Linie 24 bzw. 25 in ihrer radialen Erstreckung. Die Massen M1 und M2 sind so zueinander angeordnet, dass sich ein maximaler Wert für eine Unwucht gegenüber dem Rotationskörper 21 ergibt. Die Massen M 1 und M2 sind jedoch noch so weit voneinander beabstandet, dass ein Zwischenraum 26 zwischen den Massen M1 und M2 verbleibt, sodass sich die Rotationskörperflächen 27 und 28 nicht berühren. Unabhängig von der Einstelllage der Massen M1 und M2 zueinander ist eine Rotationskörperfläche 29 des Ringes 22 und eine Rotationskörperfläche 30 des Ringes 23 immer rotationssymmetrisch zu einer Rotationsachse 34.

Fig. 2 zeigt die Auswuchtvorrichtung 20 mit dem Rotationskörper 21 im Schnitt entlang einer Linie II-II aus Fig. 1. Aus der Schnittansicht ist ersichtlich, dass an dem Ring 22 eine Scheibe 31 ausgebildet ist, welche den Ring 22 auf dem Rotationskörper 21 verstellbar lagert. Am Ring 23 ist eine ebensolche Scheibe 32 ausgebildet, welche den Zwischenraum 26 nach außen abschließt. Die Scheiben 31 und 32 der Ringe 22 bzw. 23 sind durch hier nicht näher dargestellte und durch gestrichelte Linien angedeutete Durchgangsbohrungen 33 sowie vermittels darin einsetzbarer Verbindungsmittel miteinander verbindbar. Die Durchgangsbohrungen 33 ermöglichen die Verdrehbarkeit und Feststellbarkeit der Massen M1 und M2 zueinander. Alternativ zu den Durchgangsbohrungen 33 ist eine Befestigung der Ringe 22 und 23 mit einem hier durch eine gestrichelte Linie angedeuteten Verbindungsmittel 36, wie z. B. eine Schraube, möglich. Die hier nicht näher dargestellten Massenschwerpunkte der Massen M1 und M2 liegen beide in einer Ebene E senkrecht zur Rotationsachse 34 des Rotationskörpers 21 und der Auswuchtvorrichtung 20. Die Position des Ringes 23 auf dem Rotationskörper 21 ist durch ein hier nicht näher dargestelltes und durch eine gestrichelte Linie angedeutetes Verbindungsmittel 35, wie z. B. eine Schraube, auf dem Rotationskörper 21 fixierbar.

Die Zusammenschau von Fig. 3 und Fig. 4 zeigt eine zweite Ausführungsform einer Auswuchtvorrichtung 37, bei der im Unterschied zu der in Fig..1 und Fig. 2 gezeigten Auswuchtvorrichtung 20 die Massen M1 und M2 auf die Rotationsachse 34 bezogen einander gegenüberliegend angeordnet sind, sodass der resultierende Massenschwerpunkt beider Massen M1 und M2 auf der Rotationsachse 34 liegt und somit die Unwucht der Auswuchtvorrichtung 37 den Wert Null annimmt. Bezogen auf die axiale Erstreckung der Massen M1 und M2 liegt deren hier nicht näher dargestellter Massenschwerpunkt jeweils in einer Ebene E, sodass durch die Lage der einzelnen Massenschwerpunkte keine axialen Biegemomente entstehen können. Wie in Fig. 3 ersichtlich, ist die Masse M1 am halben inneren Umfang eines Ringes 38 ausgebildet. Analog dazu ist die Masse M2 auf dem halben äußeren Umfang eines Ringes 39 ausgebildet. Die Massen M1 und M2 sind derart radial voneinander beabstandet, dass zumindest immer ein Zwischenraum 40 zwischen beiden Massen M1 und M2 verbleibt. In einer hier nicht näher dargestellten Ausführungsform können die Massen M1 und M2 jeweils entlang einer hier gestrichelt dargestellten Linie 41 bzw. 42 als selbstständig ausgebildete Bauteile mit dem Ring 38 bzw. 39 vermittels einer Verbindungseinrichtung verbunden sein.

Die Auswuchtvorrichtung 37 ist in Fig. 4 im Schnitt entlang einer Linie IV-IV aus Fig. 3 dargestellt. Der Ring 39 umgibt den Rotationskörper 21, wobei der Ring 39 zwei jeweils abgesetzte Führungsringe 43 und 44 ausbildet. Der Ring 38 ist vermittels einer daran ausgebildeten Scheibe 45 auf den vom Ring 39 ausgebildeten Führungsring 43 aufgesteckt. Der vom Ring 39 ausgebildete Führungsring 44 ermöglicht eine Verbindung der Auswuchtvorrichtung 37 mit dem Rotationskörper 21 vermittels einer hier als gestrichelte Linie angedeuteten Verbindungseinrichtung 46, welche beispielsweise als Schraube ausgebildet sein kann. In einer alternativen Ausführungsform kann der Ring 39 auch durch eine kraftschlüssige Passverbindung mit dem Rotationskörper 21 verbunden sein. Weiter ist auf dem Führungsring 44 eine Scheibe 47 aufgesteckt und vermittels von hier nicht näher dargestellten und als gestrichelte Linie angedeuteten Verbindungseinrichtungen 48 mit dem Ring 38 verbunden. Der Ring 39 ist in seiner axialen Erstreckung im Bereich einer Rotationskörperfläche 49 geringfügig größer als der Ring 38 im Bereich einer Rotationskörperfläche 50, sodass durch beispielsweise eine Verschraubung der Scheibe 47 mit dem Ring 38 eine kraftschlüssige Verbindung entlang von sich jeweils überdeckenden Auflageflächen 51 und 52 zwischen der Scheibe 45, dem Ring 39 und der Scheibe 47 erfolgt. Durch Lösen und Klemmen der Scheibe 45 sind die Massen M1 und M2 in beliebigen Winkelabständen gegeneinander verstell- bzw. fixierbar.

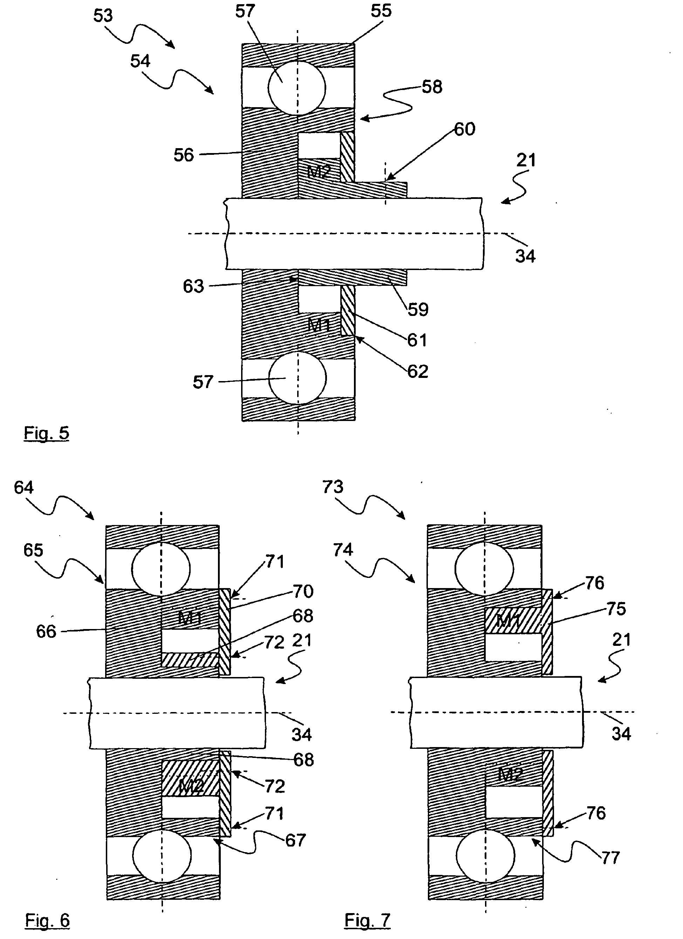

Eine dritte Ausführungsform einer Auswuchtvorrichtung 53 auf dem Rotationskörper 21 zeigt Fig. 5 in einer Schnittansicht entlang der Rotationsachse 34. Die Auswuchtvorrichtung 53 weist ein Rillenkugellager 54 auf, welches aus einem äußeren Ring 55, einem inneren Ring 56 und einer Mehrzahl von Kugeln 57 sowie weiteren für die Darstellung der Erfindung nicht wesentlichen Bauteilen zusammengesetzt ist. Am inneren Ring 56 ist ein Ring 58 mit einer exzentrischen Masse M1 ausgebildet. In dem Ring 58 ist ein Ring 59 mit einer daran ausgebildeten exzentrischen Masse M2 eingesetzt. Der Ring 59 ist über ein Verbindungsmittel 60, welches hier mit einer gestrichelten Linie angedeutet ist, auf dem Rotationskörper 21 fixierbar. Vermittels einer Scheibe 61, welche in den Ring 58 eingesetzt ist und über ein am Außendurchmesser der Scheibe 61 verlaufendes Gewinde 62 mit dem Ring 58 verbunden ist, kann der Ring 59 mit seiner stirnseitigen Auflagefläche 63 gegen den Ring 56 verspannt werden. So sind die Massen M1 und M2 durch Lösen des Ringes 61 gegeneinander verdrehbar bzw. durch Anziehen des Ringes 61 feststellbar, wobei die Lage der Auswuchtvorrichtung 53 auf dem Rotationskörper 21 durch das Verbindungsmittel 60 festgelegt werden kann.

Fig. 6 zeigt eine Auswuchtvorrichtung 64, die als Rillenkugellager 65 ausgebildet ist, wobei im Unterschied zu Fig. 5 der innere Ring 66 des Rillenkugellagers 65 einen Führungssteg 69 ausbildet, der sich entlang der gesamten Breite des Rillenkugellagers 65 erstreckt und so den Rotationskörper 21 mit der Auswuchtvorrichtung 64 verbindet. Weiter ist am inneren Ring 66 ein Ring 67 mit einer exzentrischen Masse M1 ausgebildet. In den Ring 67 ist ein Ring 68 mit einer daran ausgebildeten exzentrischen Masse M2 vollständig eingesetzt, wobei der Ring 68 auf dem Führungsring 69 des inneren Rings 66 verdrehbar aufgesetzt ist. Die Verdreh- und Feststellbarkeit der exzentrischen Masse M2 ist vermittels einer Scheibe 70 gewährleistet. Die Scheibe 70 ist über Verbindungsmittel 71 mit dem Ring 67 fest verbunden und über Verbindungsmittel 72 mit dem Ring 68 verbindbar. Die Masse M2 kann vermittels der Verbindungsmittel 72 relativ zur Masse M1 verdreht und festgestellt werden, wobei die Verbindungsmittel 72 in hier nicht näher dargestellten, radial verlaufenden bogenförmigen Langlöchern in der Scheibe 70 bewegbar sind.

Eine Auswuchtvorrichtung 73 mit einem Rillenkugellager 74 in einer fünften Ausführungsform zeigt die Fig. 7. Im Unterschied zur Fig. 6 ist die exzentrische Masse M1 an einem als Scheibe ausgebildeten Ring 75 ausgebildet. Die Verstellbarkeit der exzentrischen Masse M1 gegenüber der exzentrischen Masse M2 ist durch Verbindungsmittel 76 gewährleistet, welche ebenso die Fixierung von Ring 75 mit einem Ring 77 des Rillenkugellagers 74 ermöglichen. Im Ring 75 sind hier nicht näher dargestellte, radial verlaufende bogenförmige Langlöcher ausgebildet, welche eine Verdreh- und Verstellbarkeit des Ringes 75 gewährleisten.

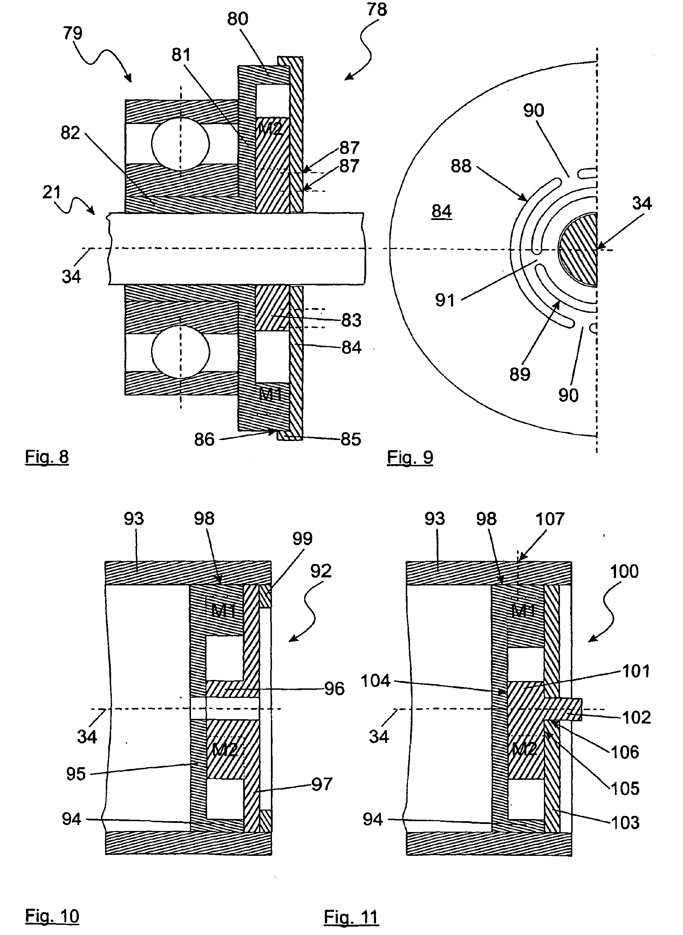

Die Zusammenschau aus Fig. 8 und Fig. 9 zeigt eine sechste Ausführungsform einer Auswuchtvorrichtung 78 mit einem mit der Auswuchtvorrichtung 78 verbundenen Rillenkugellager 79. An einem Ring 80 ist eine Scheibe 81, eine Hülse 82 und eine exzentrische Masse M1 ausgebildet. Der Ring 80 ist mit dem Rotationskörper 21 über die Hülse 82 verbunden und im Bereich der Hülse 82 vom Rillenkugellager 79 umgeben. Im Ring 80 ist ein Ring 83 mit einer daran ausgebildeten exzentrischen Masse M2 vollständig aufgenommen und mit dem Rotationskörper 21 verbunden. Eine Scheibe 84 ist auf den Ring 80 vermittels eines an einem Absatz 85 ausgebildeten Gewindes 86 aufgeschraubt, um ein Herausfallen des Ringes 83 aus dem Ring 80 zu verhindern. Die Verdreh- und Verstellbarkeit der beiden exzentrischen Massen M1 und M2 relativ gegeneinander ist durch hier nicht näher dargestellte Verbindungsmittel 87, welche eine Fixierung des Ringes 83 an der Scheibe 84 ermöglichen, gewährleistet. Die Verbindungsmittel 87 sind in eine Mehrzahl von radial bogenförmig verlaufenden Langlöchern 88 bzw. 89 einsetzbar und mit dem Ring 83 verbindbar. Die Langlöcher 88 bzw. 89 sind in unterschiedlichen Radien in der Scheibe 84 ausgebildet. Zwischen den Langlöchern 88 sind Stege 90 und zwischen den Langlöchern 89 sind Stege 91 ausgebildet. Die Stege 90 und 91 sind stets in voneinander verschiedenen Winkeln radial zur Rotationsachse 34 ausgebildet, sodass immer ein Verbindungsmittel 87 in eines der Langlöcher 88 bzw. 89 einsetzbar ist, unabhängig davon in welcher Position sich die Scheibe 84 zum Ring 83 befindet.

Fig. 10 zeigt eine siebte Ausführungsform einer Auswuchtvorrichtung 92 mit einem als Hohlkörper ausgebildeten Rotationskörper 93. Die Auswuchtvorrichtung 92 ist aus einem Ring 94, an dem eine exzentrische Masse M1 und eine Scheibe 95 ausgebildet ist und einem Ring 96 an dem eine exzentrische Masse M2 und eine Scheibe 97 ausgebildet ist zusammengesetzt. Der Ring 94 ist vermittels eines hier nicht näher dargestellten, übereinstimmend ausgebildeten Gewindes 98 in den Rotationskörper 93 eingeschraubt und so relativ zum Rotationskörper 93 verdrehbar. Der Ring 96 ist ebenso im Rotationskörper 93 verdrehbar aufgenommen, jedoch nicht über ein Gewinde mit diesem verbunden. Die Feststellung des Ringes 94 gegenüber dem Ring 96 erfolgt vermittels eines Gewinderinges 99 welcher in den Rotationskörper 93 einschraubbar ist und so eine Feststellbarkeit der Ringe 96 und 94 vermittels einer kraftschlüssigen Verbindung ermöglicht.

Eine ebensolche Auswuchtvorrichtung 100 in einer achten Ausführungsform zeigt Fig. 11. Im Unterschied zur Fig. 10 ist hier an einem Ring 101 eine exzentrische Masse M2 und ein Stab 102 ausgebildet. Der Ring 101 ist in den Ring 94 eingesetzt und gegen Herausfallen durch eine Scheibe 103 gesichert. Die Scheibe 103 ist vermittels einer hier nicht näher dargestellten Gewindeverbindung in das Gewinde 98 des Rotationskörpers 93 eingeschraubt und fixiert durch eine kraftschlüssige Verbindung über die Auflageflächen 104 und 105 den Ring 101 relativ zum Ring 94. Die Verstellung der exzentrischen Masse M2 zur exzentrischen Masse M1 kann durch den Stab 102 von außen erfolgen, da der Stab 102 durch eine Durchgangsöffnung 106 durch die Scheibe 103 hindurchgeführt ist. Alternativ zu einer Gewindeverbindung kann der Ring 94 in seiner Lage relativ zum Rotationskörper 93 durch ein hier als gestrichelte Linie angedeutetes Verbindungsmittel, wie z. B. eine Schraube, fixiert sein.

## Patentansprüche

1. Auswuchtvorrichtung (20, 37, 53, 64, 73, 78, 92, 100) für einen Rotationskörper (21, 93), mit zwei gegeneinander verdrehbaren und feststellbaren Ringen (22, 23, 38, 39, 58, 59, 67, 68, 75, 77, 80, 83, 94, 96, 101) mit jeweils einer vom Ring mitgenommenen, umlaufenden exzentrischen Masse (M1, M2), wobei sich die Schwerpunkte der exzentrischen Massen in einer Ebene (E) senkrecht zu einer Rotationsachse (34) des Rotationskörpers bewegen,
**dadurch gekennzeichnet,**
**dass** eine Rotationskörperfläche (29) des einen Ringes mit der äußeren Masse (M1) und eine Rotationskörperfläche (30) des zweiten Ringes mit der inneren Masse (M2) in jeder Einstelllage rotationssymmetrisch zur Rotationsachse sind.

2. Auswuchtvorrichtung nach Anspruch 1,
**dadurch gekennzeichnet,**
**dass** die Massen in jeder Einstelllage radial voneinander beabstandet sind.

3. Auswuchtvorrichtung nach einem der Ansprüche 1 oder 2,
**dadurch gekennzeichnet,**
**dass** die Massen an den zugehörigen Ringen ausgebildet sind.

4. Auswuchtvorrichtung nach einem der vorangehenden Ansprüche,
**dadurch gekennzeichnet,**
**dass** zumindest eine Masse mit dem zugehörigen Ring verbindbar ist.

5. Auswuchtvorrichtung nach einem der vorangehenden Ansprüche,
**dadurch gekennzeichnet,**
**dass** zumindest ein Ring mit dem Rotationskörper kraft. bzw. formschlüssig verbindbar ist.

6. Auswuchtvorrichtung nach einem der vorangehenden Ansprüche,
**dadurch gekennzeichnet,**
**dass** einer der Ringe vermittels einer Verbindungseinrichtung kraftschlüssig mit dem anderen Ring verbindbar ist.

7. Auswuchtvorrichtung nach Anspruch 6,
**dadurch gekennzeichnet,**
**dass** die Verbindungseinrichtung aus einer Scheibe (47, 61, 70, 75, 84, 99, 103) gebildet ist.

8. Auswuchtvorrichtung nach Anspruch 7,
**dadurch gekennzeichnet, dass** die Scheibe über ein Gewinde (62, 85, 98) mit dem Ring mit der äußeren Masse oder dem Rotationskörper verbunden ist.

9. Auswuchtvorrichtung nach einem der Ansprüche 7 oder 8,
**dadurch gekennzeichnet,**
**dass** die Scheibe Durchgangsöffnungen (88, 89) aufweist, über die eine Einstellung beider Massen zueinander erfolgen kann.

10. Auswuchtvorrichtung nach einem der vorangehenden Ansprüche,
**dadurch gekennzeichnet,**
**dass** der Ring (68, 83,101) mit der inneren Masse im Ring (67, 80, 94) mit der äußeren Masse aufgenommen ist.

11. Auswuchtvorrichtung nach einem der vorangehenden Ansprüche,
**dadurch gekennzeichnet,**
**dass** einer der Ringe (58, 67, 77) aus einer Lagereinrichtung gebildet ist.

12. Auswuchtvorrichtung nach einem der vorangehenden Ansprüche,
**dadurch gekennzeichnet,**
**dass** einer der Ringe aus einem Ring (56, 66) eines Wälzlagers (54, 65, 74) gebildet ist.

13. Verfahren zum Auswuchten eines Rotationskörpers nach einem der Ansprüche 1 bis 12,
**dadurch gekennzeichnet,**
**dass** durch gegenseitiges Verdrehen beider Massen (M1, M2) ihre resultierende Unwucht, bezogen auf die Rotationsachse (34), von einem maximalen Wert auf Null einstellbar ist.

## Claims

1. A balancing device (20, 37, 53, 64, 73, 78, 92, 100) for a rotary body (21, 93), with two counter-rotatable and lockable rings (22, 23, 38, 39, 58, 59, 67, 68, 75, 77, 80, 83, 94, 96, 101) each with a circulating eccentric mass (M1, M2) driven by the ring, wherein the centres of gravity of the eccentric masses move in a plane (E) perpendicularly to an axis of rotation (34) of the rotary body,
**characterized in that**
a rotary body surface (29) of the one ring with the outer mass (M1) and a rotary body surface (30) of the second ring with the inner mass (M2) are rotation-symmetrical to the axis of rotation in any set position.

2. The balancing device according to claim 1,
**characterized in that**
the masses in any set position are radially spaced from each other.

3. The balancing device according to any one of claims 1 or 2,
**characterized in that**
the masses are formed on the corresponding rings.

4. The balancing device according to any one of the preceding claims,
**characterized in that**
at least one mass can be connected with the corresponding ring.

5. The balancing device according to any one of the preceding claims,
**characterized in that**
at least one ring can be connected with the rotary body in a force-fit or form-fit manner.

6. The balancing device according to any one of the preceding claims,
**characterized in that**
one of the rings can be connected with the other ring in a force-fit manner by means of a connecting device.

7. The balancing device according to claim 6,
**characterized in that**
the connecting device is formed of a disc (47, 61, 70, 75, 84, 99, 103).

8. The balancing device according to claim 7,
**characterized in that**
the disc is connected with the ring with the outer mass or the rotary body via a thread (62, 85, 98).

9. The balancing device according to any one of claims 7 or 8,
**characterized in that**
the disc has through-openings (88, 89) via which the two masses can be set relative to each other.

10. The balancing device according to any one of the preceding claims,
**characterized in that**
the ring (68, 83, 101) with the inner mass is accommodated in the ring (67, 80, 94) with the outer mass.

11. The balancing device according to any one of the preceding claims,
**characterized in that**
one of the rings (58, 67, 77) is formed of a bearing device.

12. The balancing device according to any one of the preceding claims,
**characterized in that**
one of the rings is formed of a race (56, 66) of a rolling bearing (54, 65, 74).

13. A method for the balancing of a rotary body according to any one of claims 1 to 12,
**characterized in that**
through mutual twisting of both masses (M1, M2) their resultant unbalance, relative to the axis of rotation (34), can be set from a maximum value to zero.

## Revendications

1. Dispositif d'équilibrage (20, 37, 53, 64, 73, 78, 92, 100) pour un corps de rotation (21, 93), doté de deux bagues (22, 23, 38, 39, 58, 59, 67, 68, 75, 77, 80, 83, 94, 96, 101) pouvant tourner dans le sens inverse et étant blocables, présentant chacune une masse (M1, M2) entraînée par la bague, rotative et excentrée, les centres de gravité des masses excentrées se déplaçant dans un plan (E) perpendiculairement à un axe de rotation (34) du corps de rotation,
**caractérisé en ce qu'**
une surface de corps de rotation (29) de l'une des bagues avec la masse extérieure (M1) et une surface de corps de rotation (30) de la seconde bague avec la masse intérieure (M2) sont symétriques en rotation par rapport à l'axe de rotation dans chaque position de réglage.

2. Dispositif d'équilibrage selon la revendication 1,
**caractérisé en ce que**
les masses sont espacées radialement les unes des autres dans chaque position de réglage.

3. Dispositif d'équilibrage selon l'une quelconque des revendications 1 ou 2,
**caractérisé en ce que**
les masses sont réalisées sur les bagues associées.

4. Dispositif d'équilibrage selon l'une quelconque des revendications précédentes,
**caractérisé en ce qu'**
au moins une masse peut être reliée à la bague associée.

5. Dispositif d'équilibrage selon l'une quelconque des revendications précédentes,
**caractérisé en ce qu'**
au moins une bague peut être reliée par adhérence des forces ou complémentarité de formes avec le corps de rotation.

6. Dispositif d'équilibrage selon l'une quelconque des revendications précédentes,
**caractérisé en ce que**
l'une des bagues peut être reliée au moyen d'un système de liaison par adhérence des forces à l'autre bague.

7. Dispositif d'équilibrage selon la revendication 6,
**caractérisé en ce que**
le système de liaison est formé d'un disque (47, 61, 70, 75, 84, 99, 103).

8. Dispositif d'équilibrage selon la revendication 7,
**caractérisé en ce que**
le disque est relié par un filetage (62, 85, 98) à la bague avec la masse extérieure ou le corps de rotation.

9. Dispositif d'équilibrage selon l'une quelconque des revendications 7 ou 8,
**caractérisé en ce que**
le disque présente des ouvertures de passage (88, 89), par lesquelles un réglage des deux masses l'une par rapport à l'autre peut s'effectuer.

10. Dispositif d'équilibrage selon l'une quelconque des revendications précédentes,
**caractérisé en ce que**
la bague (68, 83, 101) avec la masse intérieure est réceptionnée dans la bague (67, 80, 94) avec la masse extérieure.

11. Dispositif d'équilibrage selon l'une quelconque des revendications précédentes,
**caractérisé en ce que**
l'une des bagues (58, 67, 77) est formée d'un dispositif de palier.

12. Dispositif d'équilibrage selon l'une quelconque des revendications précédentes,
**caractérisé en ce que**
l'une des bagues est formée d'une bague (56, 66) d'un palier de roulement (54, 65, 74).

13. Procédé pour l'équilibrage d'un corps de rotation selon l'une quelconque des revendications 1 à 12,
**caractérisé en ce que,**
par une rotation en sens inverse des deux masses (M1, M2), leur déséquilibre résultant, par rapport à l'axe de rotation (34), peut être réglé à partir d'une valeur maximale sur zéro.
